# EUROPÄISCHE PATENTSCHRIFT

(11) **EP 1 090 259 B1**
(45) Veröffentlichungstag und Bekanntmachung des Hinweises auf die Patenterteilung: **03.09.2003**
(21) Anmeldenummer: 99929271.7
(22) Anmeldetag: 18.06.1999
(51) Int. Cl.: F25D 3/12

(54) **VERFAHREN ZUR HERSTELLUNG EINES KUEHLBLOCKS UND ANLAGE ZUR HERSTELLUNG VON KUEHLBLOECKEN**
METHOD FOR THE PRODUCTION OF A REFRIGERATION BLOCK AND INSTALLATION FOR THE PRODUCTION OF REFRIGERATION BLOCKS
BLOC REFRIGERANT, PROCEDE POUR LA PRODUCTION D'UN BLOC REFRIGERANT ET INSTALLATION POUR LA PRODUCTION DER BLOCS REFRIGERANTS

(30) Priorität: 23.06.1998 FR 9808108
(43) Veröffentlichungstag der Anmeldung: 11.04.2001
(73) Patentinhaber: Messer France S.A., 93206 Saint Denis Cedex (FR)
(72) Erfinder: HENRY, Christophe, F-92800 Puteaux (FR); BEAUGE, Claude, F-95610 Eragny-sur-Oise (FR); CHAUX, Jean-Pierre, F-78800 Houilles (FR)
(74) Vertreter: Berdux, Klaus, Dipl.-Ing.
(86) Internationale Anmeldenummer: EP9904232
(87) Internationale Veröffentlichungsnummer: WO99067585

(56) Entgegenhaltungen:
- EP-A- 0 823 600
- FR-A- 2 604 243
- US-A- 5 271 233

## Beschreibung

Die Erfindung betrifft den technischen Bereich, in dem es darum geht, verschiedene Produkte auf einer niedrigen bzw. im Verhältnis zur Umgebung relativ niedrigen Temperatur zu halten, um ihre Unversehrtheit zu erhalten oder geeignete Konservierungsbedingungen für sie zu gewährleisten, die einer späteren Verwendung oder Wiederverwendung angepaßt sind.

Auf zahlreichen Anwendungsgebieten müssen Frischerzeugnisse oder tiefgefrorene Produkte bei niedriger Temperatur über vorbestimmte Zeiträume in Aufnahmeeinrichtungen, wie beispielsweise Kammer, Raum, Behälter, die im allgemeinen wärmegedämmt sind und in denen eine Konservierungstemperatur aufrechterhalten werden muß, konserviert werden können.

Eine solche Anforderung stellt sich in den Kühlketten für Lebensmittel, aber auch in den Ketten für die Lagerung, Konservierung und den Schutz von anderen Produkten als Lebensmitteln, bei denen eine gewisse Wachsamkeit hinsichtlich der Gewährleistung einer Lagerungstemperatur gefordert ist. Als Beispiel kann in einem speziellen Anwendungsfall die Konservierung von Organen, Geweben oder auch Produkten zur Behandlung oder für Eingriffe auf dem Gebiet der Medizin angeführt werden.

Um zu versuchen, die vorstehenden Anforderungen zu erfüllen, wurden nach dem Stand der Technik verschiedene Lösungen vorgeschlagen.

Von diesen Vorschlägen kann die Verwendung von losem Wassereis, Wassereis in Blockform oder in Stücken angeführt werden, die es sicherlich ermöglicht, in einem wärmeisolierten Raum eine bestimmte Temperatur zu halten, aber zwei Probleme bei der Umsetzung in der Praxis aufwirft.

Das erste ist das Problem der Herstellung solcher Blöcke, die eventuell zerstückelt werden müssen und auf alle Fälle einen gewissen Energieaufwand und eine Herstellungsdauer erfordern, die sich in Stunden ausdrückt.

Es wird also keine Flexibilität der praktischen Umsetzung geboten, und dadurch entstehen oft Schwierigkeiten, da der Einsatz nicht zeitlich sicher für die Konservierung verschiedener Produkte geplant werden kann.

Das zweite Problem ergibt sich aus dem allmählichen Schmelzen dieses Wassereises, wodurch ein Flüssigprodukt entsteht, das Lagerungs-, Entsorgungs- und Umweltschutzprobleme hervorruft.

Gemäß dem Stand der Technik wurde auch auf die Verwendung von Kühlblöcken verwiesen, die aus einer starren, im allgemeinen aus Kunststoff bestehenden Hülle bestehen, die eine Flüssigkeit oder ein Gel enthält, dessen Zusammensetzung so beschaffen ist, daß durch die Kälte eine Verfestigung eintritt und beim späteren Austausch im Inneren eines Raums, in dem solche Blöcke plaziert sind, Wärme ersetzt wird.

Wie bei der vorhergehenden Lösung ist es erforderlich, den zu deckenden Bedarf im voraus zu bestimmen und in der Lage zu sein, immer im voraus über eine Anzahl von gekühlten Blöcken zu verfügen, um zufriedenstellend auf die Nachfrage reagieren zu können.

Überdies können die bisher bei dieser Art Vorschlag vertriebenen Produkte nicht dazu verwendet werden, über relativ lange Zeiträume eine relativ niedrige Temperatur zu halten.

Gemäß dem Stand der Technik wurden auch Kühlkreise vorgeschlagen, aber ein solcher Vorschlag kann nicht als befriedigend angesehen werden, wenn es um die Kühlung von transportablen Räumen geht.

Gemäß dem Stand der Technik wurde auch vorgeschlagen, durch Druck oder Verdichtung einen Block auf Trockeneisbasis herzustellen, dessen Auslieferung an die Kunden ähnlich wie bei Wassereisblöcken erfolgt.

Unter Berücksichtigung der Verluste, die zwischen Herstellungs- und Verwendungsort entstehen, ist eine Überdimensionierung des Blocks vorzusehen, wodurch die Umsetzungskosten in einem nicht vernachlässigbaren Umfang steigen.

Es konnte vorgesehen werden, diese Blöcke in einer Hülle unterzubringen, deren Zweck lediglich in der Schutzfunktion oder der einfachen Handhabung besteht. Wenn allerdings eine Untersuchung zur Reduzierung der Verluste erwogen werden sollte, bestünde ihr Ergebnis darin, daß das Zurückgreifen auf einen Isolierstoff zu Lasten der Funktion des Wärmeaustauschs ginge, für den solche Blöcke ja gerade vorgesehen sind.

Ein Verfahren zur Herstellung eines Kühlblocks und eine Anlage zur Herstellung von Kühlblöcken gemäß den Oberbegriffen der Ansprüche 1 und 10 werden durch die FR-A-2 604 243 offenbart.

Es zeigt sich somit das Erfordernis, daß eine Technik zur Verfügung steht, mit der direkt dem Bedarf entsprechend und an Ort und Stelle Kühlblöcke geliefert werden können, die in der Lage sind, über relativ lange Zeiträume eine niedrige Temperatur zu halten, wobei dem Nutzer gleichzeitig Sicherheit bei der Handhabung sowie Sicherheit und Zuverlässigkeit hinsichtlich der Herstellung geboten wird, durch die überdies jegliche direkte Handhabung entfällt.

Der Gegenstand der Erfindung besteht einfach darin, einem solchen Bedarf zu entsprechen, indem eine neue Technik vorgeschlagen wird, die die Herstellung von Kühlblöcken an Ort und Stelle und nach Bedarf ermöglicht, wobei diese Blöcke in der Lage sind, über relativ lange Zeiträume eine niedrige Temperatur zu halten, zu interessanten Selbstkosten vor Ort hergestellt werden können, dem Nutzer Schutz vor jeglicher Verbrennungsgefahr bieten und dazu beitragen, die bekannten Gefahren der mißbräuchlichen Verwendung oder Verschwendung auszuschließen, die im allgemeinen den bekannten bisherigen Lösungen zuzuschreiben sind.

Zur Erreichung des vorstehend aufgeführten Ziels wird in erster Linie erfindungsgemäß ein Verfahren zur Herstellung eines Kühlblocks mit den Merkmalen des Anspruchs 1 vorgeschlagen.

Schließlich betrifft die Erfindung auch eine Anlage zur Herstellung von Kühlblöcken gekennzeichnet durch die Merkmale des Anspruchs 10.

Verschiedene weitere Merkmale ergeben sich aus der nachstehenden Beschreibung unter Bezugnahme auf die in der Anlage befindlichen Zeichnungen, die als nicht einschränkende Beispiele Ausführungsformen des Gegenstands der Erfindung zeigen.
Fig. 1 und Fig. 2 sind zum Teil herausgerissene Perspektivdarstellungen, die zwei Ausführungsformen eines Kühlblocks zeigen.
Fig. 3 ist eine Perspektivdarstellung, die die Ausführungsformen eines der Bestandteile des Blocks darstellt.
Fig. 4 ist eine schematische Perspektivdarstellung, die einen Bestandteil für die Herstellung eines Kühlblocks zeigt.
Die Fig. 5 und 6 sind schematische Perspektivdarstellungen, in denen die Vorrichtungen dargestellt sind, aus denen die erfindungsgemäße Anlage besteht.

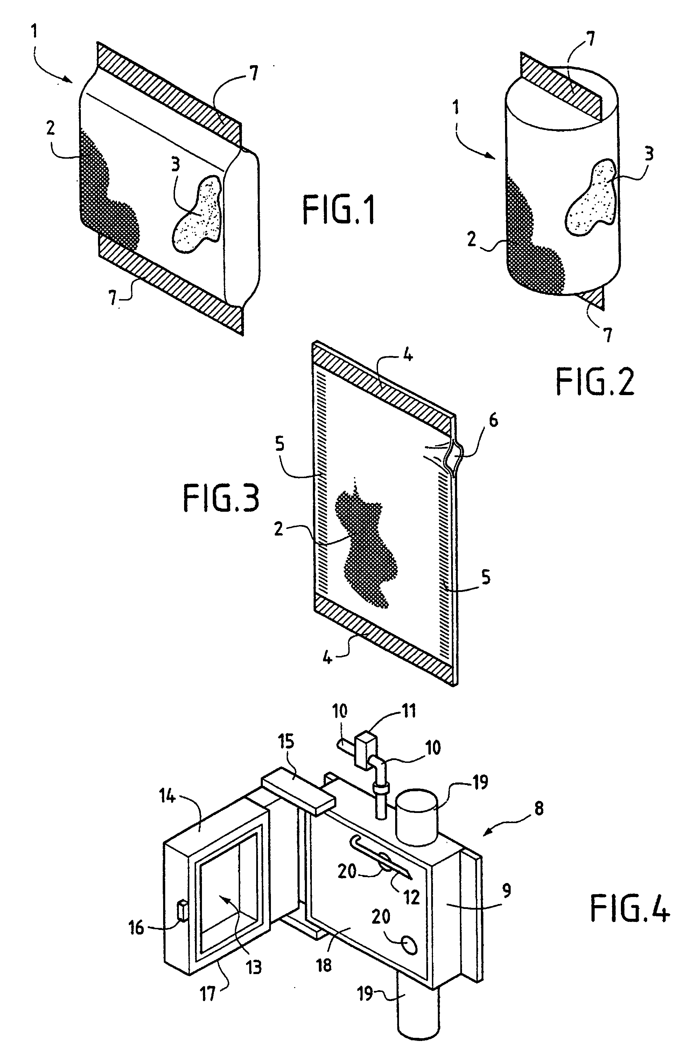

Fig. 1 zeigt einen dem Verfahren der Erfindung entsprechenden Kühlblock. Ein solcher, in seiner Gesamtheit mit der Bezugszahl 1 bezeichneter Block besteht aus einem Behälter 2, der von einer Hülle, einem Beutel oder einer Tasche von durchlässiger Beschaffenheit gebildet wird und aus beliebigen geeigneten Materialien hergestellt ist, die relativ niedrige Temperaturen aushalten und geformt werden können, um eine geeignete Volumenform oder geeignete Volumenformen anzunehmen.

Block 1 umfaßt auch einen Inhalt 3, der aus einer Kohlenstoffschneemasse besteht, die in den Behälter 2 eingespritzt wurde, mit dem er den Block 1 bildet.

Unter Berücksichtigung der Art des Inhalts 3 wird der Behälter 2 vorzugsweise aus einem Vliesmaterial hergestellt, wie z. B. aus Polypropylen, das eine Luftdurchlässigkeit zwischen 100 und 550 m³/m²/mn bei einem Luftdruck von ca. 196 Pa besitzt. Die Hülle wird zum Beispiel aus einer Materialbahn aus Polypropylen-Faservlies hergestellt, das eine Masse zwischen 10 g/m² und 100 g/m² besitzt.

Wenn es besonders geeignet scheint, eine Hülle aus einem Vliesmaterial, wie z. B. Polypropylen, einzusetzen, so muß auch festgehalten werden, daß eine Hülle aus gewebtem Material ebenfalls eingesetzt werden kann. In einem solchen Fall wäre es günstig, eine Gewebebahn zu verwenden, die im wesentlichen dieselben Eigenschaften aufweist wie vorstehend angeführt.

Die Hülle 2 und die Masse 3 bilden eine Einheit, die durch zufällige Formgebung oder durch gezielte Formgebung Volumenformen annehmen kann. Fig. 1 zeigt eine tetraedrische Blockform, wohingegen in Fig. 2 ein zylinderförmiger Block dargestellt ist.

Block 1 kann durch aufgezwungene Formgebung hergestellt werden, so daß eine Volumenform geschaffen wird, die sich für die gewünschte Anpassung besonders eignet.

Es muß berücksichtigt werden, daß die Hülle 1 auf jegliche geeignete Weise aus einer umgeschlagenen und geschweißten Materialbahn hergestellt werden kann, wie dies in Fig. 3 dargestellt ist, so daß Querseiten 4 und Längskanten 5 abgegrenzt werden, die die Grundform der Hülle festlegen, in die der Kohlensäureschnee 3 zum Beispiel über eine Öffnung 6 eingebracht werden kann, die vorzugsweise in der Nähe eines Querverschlusses 4 entlang einer der Längsseiten angebracht ist.

Die Hülle 2 kann auch aus einem Stück schlauchförmigen Band gefertigt werden, und in diesem Fall erfolgt die Abgrenzung der Hülle, wie in den Fig. 1 und 2 dargestellt, vor oder nach ihrer Füllung durch Ausführung von Querschweißnähten wie beispielsweise 7.

Die Art des Materials, aus dem die Hülle 2 besteht, ist so gewählt, daß es solche relativ niedrigen Temperaturen aushalten kann, wie sie durch den Kohlensäureschnee 3 entstehen, der bei seiner Bildung einen Schwellenwert von etwa -78 °C erreicht. Die Art des Materials ist auch so gewählt, daß der Nutzer vor jeglicher Gefahr von Verbrennungen geschützt wird, die durch Hautkontakt mit dem Block 1 aufgrund der vorstehend angegebenen Temperatur entstehen können.

Aufgrund der allgemeinen Anwendungen und der Ergebnisbedingungen, die erzielt werden sollen, kann vorgesehen werden, dem Block 1 solche allgemeinen Abmessungen zu geben, daß er eine Kohlensäureschneemasse von mindestens 100 g aufnehmen kann.

Zur Herstellung eines wie vorstehend beschriebenen Kühlblocks 1 sieht die Erfindung vor, ein Verfahren einzusetzen, das die Verwendung einer durchlässigen Hülle, wie z. B. die in Fig. 3 gezeigte Hülle 2, und die Einführung einer Kanüle in diese Hülle beispielsweise durch die Öffnung 6 umfaßt. Es ist zu berücksichtigen, daß die Hülle 2 vollkommen geschlossen sein kann und daß in diesem Fall Mittel eingesetzt werden, damit die Kanüle selbst die Hülle durchstößt, indem sie durch ihren Einsatz eine entsprechende Öffnung schafft.

Die Kanüle ist mit einer Einheit zur Speicherung von flüssigem Kohlendioxid verbunden, das über die kalibrierte Öffnung, die über ein vor der Kanüle angeordnetes Ventil gesteuert wird, ins Innere der Hülle 2 geleitet wird.

Dadurch, daß in die Hülle eine Flüssigkohlendioxidfüllung eingebracht wird, kommt es zur Entspannung dieses flüssigen Kohlendioxids, das in der Hülle die gewünschte Kohlensäureschneemasse 3 bildet. Bei der Entspannung durchströmt das Restgas, das durch das sich entspannende flüssige Kohlendioxid entsteht, die durchlässige Hülle 2, um dann auf eine geeignete Art und Weise ableitet zu werden. Es ist anzumerken, daß es entsprechend der Erfindung vorteilhaft erscheint, zu gewährleisten, daß diese Gasphase kontrolliert so aufgefangen wird, daß sie für eine erneute Verflüssigung Wiederverwendung findet.

Auf diese Art und Weise erhält man einen Block 1, der aus einer durchlässigen Hülle 2 und einer Masse 3 besteht, ohne daß jedoch gewährleistet werden kann, daß ein Reproduzierbarkeitsfaktor für die Volumenformgebung des Blocks erzielt werden kann. Entsprechend dem erfindungsgemäßen Verfahren kann es von Vorteil sein, eine Formgebungsvorrichtung, wie sie in Fig. 4 dargestellt ist, einzusetzen. Eine solche Formgebungsvorrichtung, die als Ganzes mit der Bezugszahl 8 bezeichnet ist, umfaßt einen Haltekörper 9, der mit einer an eine Speichereinheit für flüssiges Kohlendioxid angeschlossenen Rohrleitung 10 verbunden ist. Die Rohrleitung 10 wird durch ein Auf-Zu-Magnetventil 11 gesteuert. Hinter dem Magnetventil 11 wird die Rohrleitung 10 vom Körper 9 gehalten und ist mit einer Kanüle 12 verbunden, die im Innern einer Kammer 13 angeordnet sein kann, die durch einen Deckel 14 gebildet wird, der mit einem geeigneten Mittel, wie insbesondere zum Beispiel einer Schwenkachse 15, auf den Körper 9 aufgesetzt und mit Verschlußvorrichtungen 16 versehen werden kann. Die Kammer 13 wird gebildet, damit eine geeignete Form verfügbar ist, die die Form vorgibt, die der Block 1 erhalten soll. Der Deckel 14 ist mit einer Dichtung 17 versehen, die nach Schließen der Formgebungsvorrichtung mit der Auflagefläche 18 des Körpers 9 zusammenwirken soll.

Der Körper 9 ist auch mit einer Rohrleitung 19 zum Abführen des Restgases versehen, und diese Leitung ist ständig mit mindestens einer zur Auflagefläche 18 des Körpers 9 hin gerichteten Öffnung 20 oder, wie bereits erwähnt, einem geeigneten Wiederaufbereitungs-/Recycling-Kreis verbunden.

Um einen Kühlblock gemäß der vorstehenden Beschreibung herzustellen, wird eine Hülle 2 entweder über die Öffnung 6, wenn diese vorgesehen ist, oder, wie vorher vorgesehen, durch direktes Durchstoßen auf die Kanüle 12 aufgezogen. In dieser Situation befindet sich die Hülle 2 parallel zur Auflagefläche 18, auf die der Deckel 14 zum Wiederverschließen aufgelegt werden kann.

Das Magnetventil 11 kann dann geöffnet werden, um die Einleitung einer Menge von flüssigem Kohlendioxid über die Kanüle 12 in das Innere der Hülle 2 zu steuern, durch dessen Entspannung im Innern der Hülle 2 eine Kohlensäureschneefüllung entsteht. Das durch die Entspannung des flüssigen Kohlendioxids entstehende Restgas wird durch die Öffnung oder Öffnungen 20 und die Rohrleitung oder Rohrleitungen 19 abgeleitet, um es aus der Kammer 13 zu entfernen, damit nach Schließen des Magnetventils 11 der Deckel 13 geöffnet werden kann, der den Zugang zum Kühlblock ermöglicht, der wiederum leicht von der Kanüle 12 abgezogen werden kann.

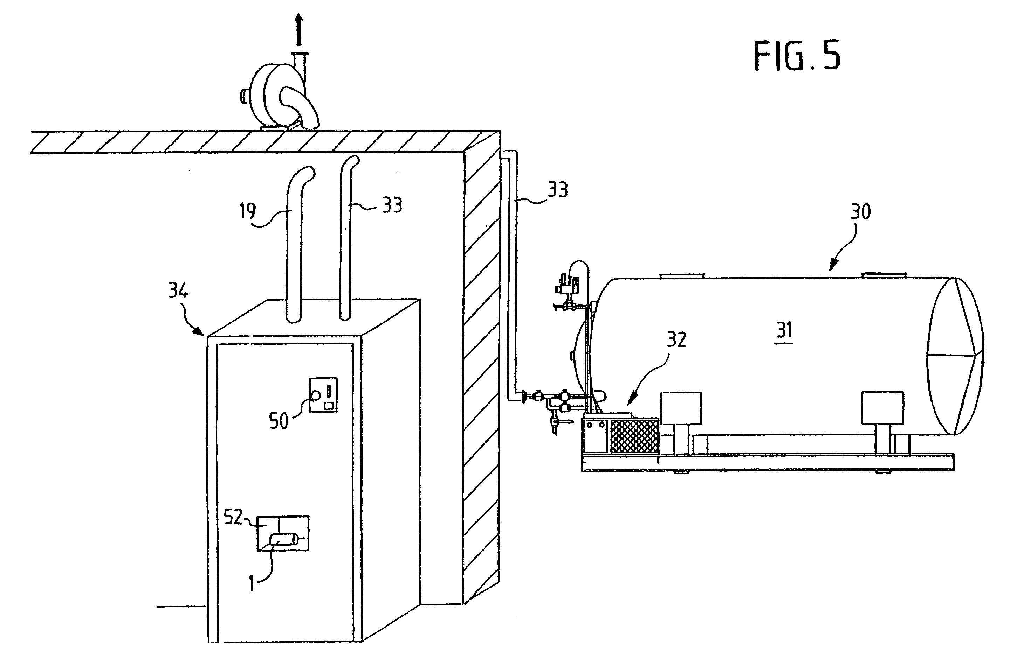

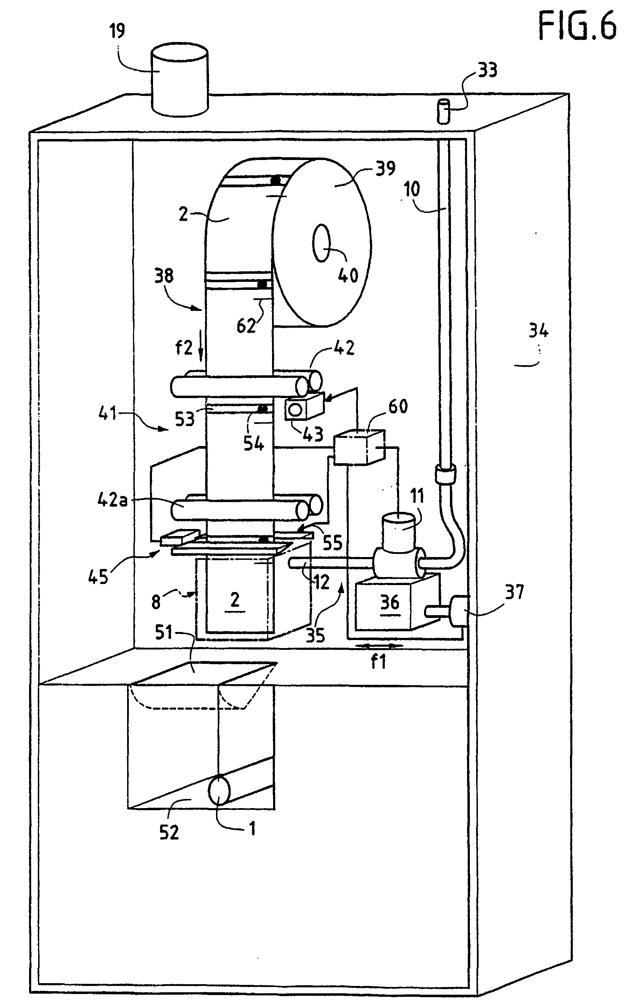

Das vorstehend beschriebene Verfahren kann vorteilhaft mit einer Anlage durchgeführt werden, wie sie in den Fig. 5 und 6 beschrieben ist.

Eine solche Anlage umfaßt eine Einheit 30 zur Speicherung von Kohlendioxid in flüssiger Form (Fig. 5). Eine solche Einheit besteht im wesentlichen aus einem Tank oder einem Behälter 31, der mit den üblichen Zubehörteilen 32 für die Regelung ausgestattet ist, die es gestatten, auf Wunsch flüssiges Kohlendioxid zu einer Speiseleitung 33 zu leiten, die in einen Schrank 34 mündet, in dem die verschiedenen technischen, für die Herstellung von Kühlblöcken erforderlichen Vorrichtungen untergebracht sind.

Fig. 6 zeigt, daß solche, im Schrank 34 angeordnete Vorrichtungen eine Station 35 zum Einspritzen von Kohlensäureschnee umfassen, der durch Entspannung von unter Druck stehendem, aus der Speichereinheit 30 stammendem flüssigem Kohlendioxid entsteht. Zu dieser Station gehört das Magnetventil 11, das über die Rohrleitung 10 mit der Leitung 33 verbunden ist. Das Magnetventil 11 wird durch die Kanüle 12 verlängert und kann vorteilhaft auf einen verschiebbaren Wagen 36 montiert werden, der mit einem geeigneten Betätigungsgerät 37 in beide Richtungen des Pfeils f₁ verfahren werden kann. Im dargestellten Beispiel wird die Station 35 in vereinfachter Darstellung und Anordnung gezeigt, es ist jedoch zu berücksichtigen, daß eine solche Station mit der unter Bezugnahme auf Fig. 4 beschriebenen und in Fig. 6 strichpunktiert dargestellten Formgebungsvorrichtung 8 ausgestattet sein kann. In einem solchen Beispiel kann der Formgebungsblock 8 ein etwas anderes Aussehen besitzen, so daß er in seinem Innern eine Hülle 2 aufnimmt, in die die Kanüle 12 wie vorstehend angegeben eingeführt werden kann. Die Hülle 2 kann der Einheit auf der Station 35 angepaßt werden, entsprechend der erfindungsgemäßen Anlage ist es jedoch von Vorteil, wenn eine solche Hülle 2 aus einem in Bandform 38 vorliegenden Material hergestellt wird, das von einer auf einem Ablaufmagazin 40 montierten Rolle 39 geliefert wird. Das Band 38 kann vorteilhafterweise von einer Abwickelvorrichtung 41 aufgenommen werden, die mindestens ein Paar 42 von einem Motor 43 getriebener Rollen umfaßt, um den intermittierenden Ablauf des Bandes 38 in Richtung des Pfeils f₂ auszulösen.

Vorzugs-, jedoch nicht zwingenderweise kann die Vorrichtung 41 auch ein Paar 42a Führungsrollen umfassen, die das Band 38 so aufnehmen, daß die Außenhülle 2 entsprechend im Inneren der Formgebungsvorrichtung 8 der Station 35 gebildet wird.

Im Schrank 34 sind ebenfalls Vorrichtungen 45 zum Abschneiden des Bandes 38 untergebracht, wobei solche Vorrichtungen 45 in der Formgebungsvorrichtung 8 oder in deren unmittelbarer Nähe angeordnet sind, damit sie so funktionieren, wie aus nachstehender Beschreibung hervorgeht.

Der Schrank 34 wird schließlich, insbesondere im Falle der dargestellten Ausführung, mit der Rohrleitung 19 zur Ableitung der durch die Entspannung des flüssigen Kohlendioxids entstehenden Restgase komplettiert.

Zur Herstellung eines Kühlblocks betätigt der Nutzer die Steuertafel 50 (Fig. 5), um den Ablauf des Bandes 38 in Richtung des Pfeils f₂ über den Motor 43 und den Mechanismus 41 mit dem Ziel zu steuern, eine Hülle 2 zur Station 35 oder sogar ins Innere der Formgebungsvorrichtung 8 zu führen. In dieser Situation wird der Motor 37 zur Steuerung der Einführung der Kanüle 12 in das Innere der Hülle 2 eingeschaltet, dann erfolgt die Steuerung des Magnetventils 11 zum öffnen, damit in diese Hülle die erforderliche Menge Flüssigkohlendioxid eingelassen wird, durch dessen Entspannung einerseits Restgase entstehen, die durch die Rohrleitung 19 abgeführt werden, und andererseits eine im Innern der Hülle 2 eingeschlossene Kohlensäureschneefüllung.

Nach dieser Produktionsphase werden die Schneidvorrichtungen 45 betätigt, um die gefüllte Hülle vom Band 38 zu trennen, wobei eine solche gefüllte Hülle, die den Block 1 bildet, von einer Abführrutsche 51 übernommen und aufgenommen wird, die zu einer Entnahmeklappe oder einem Schalter zur vorübergehenden Lagerung 52 führt.

Die Hüllen 2 werden vorzugsweise zur Bildung des Bandes 38 hintereinander ausgerichtet und auf vorteilhafte Weise im Wechsel mit sogenannten Trennbereichen 53 angeordnet, in denen die Schneidvorrichtungen 45 arbeiten.

Fig. 6 zeigt, daß es ebenfalls vorteilhaft ist, jeden Bereich 53 mit einem Bezugszeichen 54 in jeder geeigneten Form zu versehen, das mittels eines zur Station 35 gehörenden Fühlers 55 abgetastet werden kann. Der Fühler 55 kann so in der Lage sein, den Serienbetrieb der Anlage für die Herstellung eines Kühlblocks 1 zu starten.

Fig. 6 zeigt, daß es vorteilhaft sein kann, einen programmierbaren Automaten 60 einzusetzen, der vom Fühler 55 abhängt, um manuell oder automatisch den Serienbetrieb der Anlage zu starten, indem, wenn dies nicht bereits während des vorhergehenden Zyklus geschehen ist, die Zuführvorrichtungen, wie z. B. der Motor 43, angesteuert werden, damit der Ablauf des Bandes 38 in Richtung des Pfeils f₂ ausgelöst wird und an der Verteiler-/Entspannungsstation 35 eine Hülle 2 vorliegt.

Dann steuert der Automat 60 das Betätigungsgerät 37, damit es zum Eindringen der Kanüle 12 in die vorzugsweise im Innern der Formvorrichtung 8 angeordnete Hülle 2 kommt.

Der Automat 60 steuert das Magnetventil 11 an, daß es öffnet, damit die Menge flüssigen Kohlendioxids in die Hülle 2 einströmen kann und die Bildung der erforderlichen Menge Kohlensäureschnee wie vorher beschrieben gewährleistet ist.

Der Automat 60 steuert dann die Funktion der Vorrichtungen 45, um die gefüllte Hülle vom Band 38 abzuschneiden, zu trennen oder abzutrennen.

Gegebenenfalls steuert der Automat 60 je nach dem gewählten Zyklus den Betrieb des Motors 43 der Zuführvorrichtung, damit eine neue Hülle 2 in Wartestellung an die Station 35 gebracht wird.

Es muß natürlich berücksichtigt werden, daß die Einführung der Kanüle 12 in die Hülle 2, wenn angegeben ist, daß sie sich aus dem Verfahren des Schlittens 36 ergibt, ebenfalls infolge einer relativen Verschiebung in Gegenrichtung erfolgen kann, die darin besteht, die Hülle 2 auf die fest angebrachte Kanüle 12 aufzuschieben. In einem solchen Fall und unter der Annahme, daß der Automat 60 vorhanden ist, besteht die von ihm gesteuerte Phase des Zyklus der relativen Verschiebung darin, die Bewegung der Formgebungsvorrichtung und/oder des Bands 38 in die entsprechende Richtung zu bewirken. Eine solche Variante ergibt sich aus den Kenntnissen des Fachmanns.

Fig. 6 zeigt, daß jede Hülle 2, aus der das Band 38 besteht, auch mit einem Bezugszeichen 62 versehen sein kann, das der Öffnung 6 entspricht, wenn diese vorhanden ist, und das Einführen der Kanüle 12 ermöglicht.

Eine Anlage gemäß Fig. 6 kann vereinfacht werden, insbesondere wenn es vorgesehen ist, daß die Perforierung der Hülle 2 mit der Kanüle erfolgt. In einem solchen Fall wird es tatsächlich möglich, ein schlauchförmiges Band 38 zu verwenden, das bei jedem Durchlauf um die gewünschte Länge abgewickelt wird, die sich als eine erste, während des vorherigen Durchlaufs ausgeführte Schweißnaht materialisiert, die sich im unteren abschließenden Teil des abgewickelten Bandes befindet. Nach Abwicklung der gewünschten Länge wird im oberen Teil zur Begrenzung der Höhe der so gebildeten Hülle 2, in die die Kanüle eingeführt wird, eine Schweißnaht ausgeführt. Nach dem Füllen erfolgt ein Schneidvorgang an der oberen Schweißnaht, um die gefüllte Hülle vom Band 38 zu trennen. Es ist zu berücksichtigen, daß es vorteilhaft ist, den Schnitt in der Mitte der Breite der oberen Schweißnaht auszuführen, wodurch gleichzeitig die untere Schweißnaht für die nachfolgende Hülle gebildet werden kann.

Auf diese Weise wird die Anlage vereinfacht, und es wird möglich, ein schlauchförmiges Band 38 zu verwenden, dessen Kosten niedriger sind als die eines speziellen vorgefertigten Bandes.

Die vorstehend beschriebene Anlage kann durch einen Meßfühler vervollständigt werden, der die Position der Kanüle in der Hülle ermittelt und die Öffnung des Magnetventils 11 bewirkt.

Die Anlage kann auch mit einer vorgeschalteten Station versehen sein, an der das Band 38 entweder durch Falten einer Ausgangsmateriallage oder sogar durch Web- oder Vliesausführung der genannten Materiallage oder des genannten Bandes hergestellt werden kann.

Die Anlage kann ebenfalls so ausgeführt sein, daß von mehreren Linien zur gleichzeitigen Fertigung eine entsprechende Anzahl von Kühlblöcken aus vollkommen voneinander unabhängigen oder miteinander vor allem durch Stege mit geringem Reißwiderstand verbundenen Bändern 38 hergestellt wird.

Die Erfindung ist nicht auf die beschriebenen und dargestellten Beispiele beschränkt, da an ihr verschiedene Änderungen innerhalb des Schutzbereiches vorgenommen werden können.

## Patentansprüche

1. Verfahren zur Herstellung eines Kühlblocks (1), das darin besteht, daß
- eine durchlässige Hülle (2)zur Verfügung steht,
- in diese Hülle (2) eine Kanüle (12) eingeführt wird, die mit einer Einheit zur Speicherung von flüssigem Kohlendioxid verbunden ist,
- in die Hülle (2) flüssiges Kohlendioxid eingeleitet wird, das dazu gebracht wird, sich zu entspannen, damit in der Hülle (2) eine Kohlensäureschneemasse entsteht,
- durch die durchlässige Hülle (2) das bei der Entspannung des flüssigen Kohlendioxids entstandene Restgas abgeleitet wird,
- die durchlässige Hülle (2) in einer Formgebungsvorrichtung (8) plaziert wird,
- und das flüssige Kohlendioxid in die im Innern der Formgebungsvorrichtung (8) befindliche Hülle (2) geleitet wird
**dadurch gekennzeichnet,**
**daß** die Formgebungsvorrichtung (8) mit einer Rohrleitung (19) zur Ableitung des Restgases verbunden ist, und dass die Restgase aufgefangen und aufbereitet werden, um sie wiederzuverwenden.

2. Verfahren gemäß Anspruch 1, **dadurch gekennzeichnet, daß** die ununterbrochene Füllung von Hüllen (2) erfolgt, indem eine nach der anderen an einer Station (35) zur Einspritzung von Kohlensäureschnee anlangt, der durch Entspannung von unter Druck stehendem, flüssigem Kohlendioxid entsteht.

3. Verfahren gemäß Anspruch 1, **dadurch gekennzeichnet, daß** die gleichzeitige Füllung von mindestens zwei Hüllen (2) erfolgt.

4. Verfahren gemäß Anspruch 2 oder 3, **dadurch gekennzeichnet, daß** die Hüllen (2) an der Einspritzstation (35) in Form von mindestens einem Band (38)anlangen und daß nach dem Füllen eine jede von ihnen abgetrennt wird.

5. Verfahren gemäß einem der Ansprüche 1 bis 4, **dadurch gekennzeichnet, daß** jede Hülle (2) an der Einspritzstation (35) eine Öffnung (6) aufweist, die die Hülle im Zusammenhang mit dem relativen Eindringen einer zur genannten Station (35) gehörenden Kanüle (12) besitzt.

6. Verfahren gemäß einem der Ansprüche 1 bis 5, **dadurch gekennzeichnet, daß** jede Hülle (2) aus einem schlauchförmigen Band gefertigt wird, an dem Querschweißnähte angebracht werden, und daß das genannte Band nach Füllung der Hülle (2) an einer der Schweißnähte abgetrennt wird.

7. Verfahren gemäß einem der Ansprüche 3 bis 6, **dadurch gekennzeichnet, daß** das Band direkt vor der Einspritzstation (35) hergestellt wird.

8. Verfahren gemäß einem der Ansprüche 1 bis 7, **dadurch gekennzeichnet, daß** die Füllung der Hülle (2) mittels einer Kanüle (12) durchgeführt wird, die die Hülle (2) selbst durchstößt.

9. Verfahren gemäß einem der Ansprüche 1 bis 8, **dadurch gekennzeichnet, daß** eine Einspritzkanüle (12) in das Innere der Hülle (2) einführt wird, daß die Position der genannten Kanüle (12) in der Hülle abgetastet wird und daß die Öffnung eines Einspritz-Magnetventils (11) freigegeben wird oder nicht.

10. Anlage zur Herstellung von Kühlblöcken (1), die jeweils aus einer durchlässigen, eine Kohlensäureschneemasse (3) enthaltenden Hülle (2) bestehen, umfassend:
- eine Einheit (30) für die Speicherung von flüssigem Kohlendioxid,
- eine Station (35) zur Einspritzung von Kohlensäureschnee durch Entspannung einer Menge von unter Druck stehendem flüssigem Kohlendioxid, das von der Einheit geliefert wird,
- Vorrichtungen (42), (43) zur Zuführung von mindestens einer durchlässigen Hülle zur Station,
- wobei die Station (35) zur Einspritzung von Kohlensäureschnee mit einer Formgebungsvorrichtung (8) verbunden ist,
**dadurch gekennzeichnet,**
- **daß** mit der Station verbundene Vorrichtungen (19) zur Abführung des bei der Entspannung des flüssigen Kohlendioxidsentstandenen Restgases vorgesehen sind,
- und **daß** die Formgebungsvorrichtung in Form eines Gehäuses (9), (14) ausgeführt ist, an das die Rohrleitung (19) zur Abführung des Restgases angeschlossen ist.

11. Anlage gemäß Anspruch 10, **dadurch gekennzeichnet, daß** zur Station (35) eine Einspritzkanüle (12) gehört, die relativ in die durchlässige Hülle (2) eindringen soll.

12. Anlage gemäß Anspruch 10 oder 11, **dadurch gekennzeichnet, daß** der Station (35) aufeinanderfolgende Hüllen (2) zugeführt werden, die in Form von mindestens einem Band (38) angeordnet sind, sowie dadurch, daß sie mit Schneidvorrichtungen (45) ausgestattet ist, die in der Lage sind, jede gefüllte Hülle vom Band zu trennen.

13. Anlage gemäß Anspruch 12, **dadurch gekennzeichnet, daß** das Band der Station durch einen Ablaufmechanismus (42), (43) von einer dem Ablaufmagazin (40) angepaßten Rolle (39) zugeführt wird.

14. Anlage gemäß Anspruch 12 oder 13, **dadurch gekennzeichnet, daß** jede Hülle mit einer Öffnung (6) zur Einführung der Kanüle (12) versehen ist.

15. Anlage gemäß einem der Ansprüche 12 bis 14, **dadurch gekennzeichnet, daß** jede Hülle von der nächsten durch einen Abtrennbereich (53) getrennt ist, der ein Bezugszeichen (54) zur Erkennung des tatsächlichen Vorhandenseins einer Hülle an der Station besitzt.

16. Anlage gemäß Anspruch 12 oder 15, **dadurch gekennzeichnet, daß** sie aus folgendem besteht:
- einer Vorrichtung zur Zuführung eines schlauchförmigen Bandes,
- Vorrichtungen zur Ausführung von zwei Querschweißnähten im Band, um mindestens eine Hülle abzugrenzen,
- und Vorrichtungen zum Abtrennen der gefüllten Hülle vom Band durch Ausführung eines Schnitts an einer der Schweißnähte.

17. Anlage gemäß einem der Ansprüche 12 bis 16, **dadurch gekennzeichnet, daß** sie eine Station zur Herstellung des Bandes umfaßt.

18. Anlage gemäß einem der Ansprüche 10 bis 17, **dadurch gekennzeichnet, daß** sie einen programmierbaren Automaten (60) umfaßt, der manuell oder automatisch durch einen Fühler (55) aktiviert wird, der das Vorhandensein des Bezugszeichens einer Hülle an der Station erfaßt und den Serienbetrieb
- eines Betätigungsgeräts (37), das die relative Verschiebung zwischen Ein-spritzkanüle und durchlässiger Hülle steuert,
- einer Formgebungsvorrichtung (8),
- eines Auf-Zu-Magnetventils (11) einer Speiseleitung (10) der Flüssigkohlen-dioxidstation,
- von Vorrichtungen (45) zum Abschneiden der mit Kohlensäureschneemasse gefüllten Hülle, mit der sie einen Kühlblock (1) bildet,
- von Vorrichtungen (42), (43) zur Zuführung einer neuen durchlässigen Hülle zur Station startet.

## Claims

1. Method for producing a refrigerating block (1), which comprises
- providing a permeable sheath (2),
- inserting into the sheath (2) a cannula (12), which is connected to a unit for storing liquid carbon dioxide,
- introducing into the sheath (2) liquid carbon dioxide which is made to expand, in order that a mass of carbon dioxide snow is produced in the sheath (2),
- allowing the residual gas produced during the expansion of the liquid carbon dioxide to dissipate through the permeable sheath (2),
- placing the permeable sheath (2) in a moulding device (8),
- and conducting the liquid carbon dioxide into the sheath (2) located in the interior of the moulding device (8),
**characterized**
**in that** the moulding device (8) is connected to a pipeline (19) for carrying away the residual gas, and in that the residual gases are collected and treated for re-use.

2. Method according to Claim 1, **characterized in that** the uninterrupted filling of sheaths (2) is performed by one after the other arriving at a station (35) for the injection of carbon dioxide snow, which is produced by expansion of pressurized liquid carbon dioxide.

3. Method according to Claim 1, **characterized in that** the simultaneous filling of at least two sheaths (2) takes place.

4. Method according to Claim 2 or 3, **characterized in that** the sheaths (2) reach the injection station (35) in the form of at least one strip (38) and **in that**, after filling, each one of them is separated.

5. Method according to one of Claims 1 to 4, **characterized in that** each sheath (2) at the injection station (35) has an opening (6), which the sheath has in connection with the relative penetration of a cannula (12) belonging to the said station (35).

6. Method according to one of Claims 1 to 5, **characterized in that** each sheath (2) is produced from a strip in tube form, on which transverse weld seams are provided, and **in that** the said strip is separated at one of the weld seams after filling of the sheath (2).

7. Method according to one of Claims 3 to 6, **characterized in that** the strip is produced directly before the injection station (35).

8. Method according to one of Claims 1 to 7, **characterized in that** the filling of the sheath (2) is carried out by means of a cannula (12), which pierces the sheath (2) itself.

9. Method according to one of Claims 1 to 8, **characterized in that** an injection cannula (12) is inserted into the interior of the sheath (2), **in that** the position of the said cannula (12) in the sheath is sensed and **in that** the opening of a solenoid injection valve (11) is released or not.

10. Installation for producing refrigerating blocks (1), which respectively comprise a permeable sheath (2) containing a mass of carbon dioxide snow (3), comprising:
- a unit (30) for the storing of liquid carbon dioxide,
- a station (35) for the injection of carbon dioxide snow by expansion of an amount of pressurized liquid carbon dioxide which is supplied by the unit,
- devices (42), (43) for the feeding of at least one permeable sheath to the station,
- the station (35) for the injection of carbon dioxide snow being connected to a moulding device (8),
**characterized**
- **in that** devices (19) connected to the station are provided for the removal of the residual gas produced during the expansion of the liquid carbon dioxide,
- and **in that** the moulding device is configured in the form of a housing (9), (14), to which the pipeline (19) for the removal of the residual gas is connected.

11. Installation according to Claim 10, **characterized in that** the station (35) includes an injection cannula (12), which is intended to penetrate relatively into the permeable sheath (2).

12. Installation according to Claim 10 or 11, **characterized in that** the station (35) is fed successive sheaths (2), which are arranged in the form of at least one strip (38), and **in that** it is equipped with cutting devices (45), which are capable of separating each filled sheath from the strip.

13. Installation according to Claim 12, **characterized in that** the strip is fed to the station by a run-off mechanism (42), (43) from a roll (39) adapted to the run-off magazine (40).

14. Installation according to Claim 12 or 13, **characterized in that** each sheath is provided with an opening (6) for the insertion of the cannula (12).

15. Installation according to one of Claims 12 to 14, **characterized in that** each sheath is separated from the next by a separating region (53), which has a reference symbol (54) for the detection of the actual presence of a sheath at the station.

16. Installation according to Claim 12 or 15, **characterized in that** it comprises the following:
- a device for the feeding of a strip in tube form,
- devices for the forming of two transverse weld seams in the strip, to delimit the at least one sheath,
- and devices for separating the filled sheath from the strip by performing a cut at one of the weld seams.

17. Installation according to one of Claims 12 to 16, **characterized in that** it comprises a station for producing the strip.

18. Installation according to one of Claims 10 to 17, **characterized in that** it comprises a programmable automated unit (60), which is activated manually or automatically by a probe (55), which senses the presence of the reference symbol of a sheath at the station and starts the series operation
- of an actuating device (37), which controls the relative displacement between the injection cannula and the permeable sheath,
- of a moulding device (8),
- of an open-close solenoid valve (11) of a feed line (10) of the liquid carbon dioxide station,
- of devices (45) for cutting off the sheath filled with a mass of carbon dioxide snow, with which it forms a refrigerating block (1),
- of devices (42), (43) for the feeding of a new permeable sheath to the station.

## Revendications

1. Procédé de fabrication d'un bloc de refroidissement (1), selon lequel :
- on fournit une enveloppe perméable (2),
- on introduit une canule (12) dans cette enveloppe (2), cette canule étant reliée à un module contenant du dioxyde de carbone liquide,
- on introduit le dioxyde de carbone liquide dans l'enveloppe (2) de façon à le faire détendre et former une masse de neige carbonique dans l'enveloppe (2),
- on évacue le gaz résiduel dégagé par la détente du dioxyde de carbone liquide à travers l'enveloppe perméable (2),
- on met l'enveloppe perméable (2) dans un dispositif de mise en forme (8), et
- on conduit le dioxyde de carbone liquide dans l'enveloppe (2) qui se trouve à l'intérieur du dispositif de mise en forme (8),
**caractérisé en ce que**
on relie le dispositif de mise en forme (8) à une conduite tubulatre (19) pour évacuer le gaz résiduel et on recueille et on traite le gaz résiduel pour le recycler.

2. Procédé selon la revendication 1,
**caractérisé en ce qu'**
on remplit de manière ininterrompue des enveloppes (2) **en ce que** celles-ci arrivent l'une après l'autre dans un poste (35) d'injection de neige carbonique formé par la détente de dioxyde de carbone liquide sous pression.

3. Procédé selon la revendication 1,
**caractérisés en ce qu'**
on remplit simultanément au moins deux enveloppes (2).

4. Procédé selon la revendication 2 ou 3,
**caractérisé en ce que**
les enveloppes (2) arrivent au niveau du poste d'injection (35) sous la forme d'au moins une bande (38) et après le remplissage, on sépare chacune des enveloppes.

5. Procédé selon l'une quelconque des revendications 1 à 4,
**caractérisé en ce que**
chaque enveloppe (2) comporte une ouverture (6) dans le poste d'injection (35), cette ouverture recevant une canule (12) introduite dans l'enveloppe par introduction relative dans le poste (35).

6. Procédé selon l'une quelconque des revendications 1 à 5,
**caractérisé en ce que**
chaque enveloppe (2) est fabriquée à partir d'une bande tubulaire sur laquelle on réalise des cordons de soudure transversaux et,
après remplissage de l'enveloppe (2), on sépare la bande au niveau de l'un des cordons de soudure.

7. Procédé selon l'une quelconque des revendications 3 à 6,
**caractérisé ce qu'**
on réalise la bande directement en amont du poste d'injection (35).

8. Procédé selon l'une quelconque des revendications 1 à 7,
**caractérisé en ce qu'**
on remplit l'enveloppe (2) à l'aide d'une canule (12) qui perce elle-même l'enveloppe (2).

9. Procédé selon l'une quelconque des revendications 1 à 8,
**caractérisé en ce qu'**
on introduit une canule d'injection (12) à l'intérieur de l'enveloppe (2), on détecte la position de la canule (12) dans l'enveloppe et on libère ou non l'ouverture d'une électrovanne d'injection (11).

10. Installation pour la fabrication de blocs de refroidissement (1) formés chacun d'une enveloppe (2) perméable contenant une masse de neige carbonique (3), comprenant :
- un module (30) pour contenir le dioxyde de carbone liquide,
- un poste (35) pour injecter la neige carbonique par détente d'une certaine quantité de dioxyde de carbone liquide sous pression fournie par la réserve,
- des dispositifs (42, 43) pour fournir au moins une enveloppe perméable au poste,
- le poste (35) étant relié à un dispositif de mise en forme (8) pour injecter la neige carbonique,
**caractérisée en ce que**
- des dispositifs (19) sont reliés au poste pour évacuer le gaz résiduel engendré par détente du dioxyde de carbone liquide, et
- le dispositif de mise en forme se présente comme un boîtier (9, 14) relié à une conduite (19) pour évacuer le gaz résiduel.

11. Installation selon la revendication 10,
**caractérisée en ce que**
le poste (35) comporte une canule d'Injection (12) qui pénètre l'enveloppe perméable (2) par un mouvement de pénétration relative.

12. Installation selon la revendication 10 ou 11,
**caractérisée en ce que**
le poste (35) reçoit des enveloppes (2) successives sous la forme d'au moins une bande (38) et il est équipé de dispositifs de découpe (45) qui sont en mesure de séparer chaque enveloppe remplie par rapport à la bande.

13. Installation selon la revendication 12,
**caractérisée en ce que**
la bande est fournie au poste par un mécanisme de dévidage (42, 43) à partir d'un rouleau (39) adapté au magasin de dévidage (40).

14. Installation selon la revendication 12 ou 13,
**caractérisée en ce que**
chaque enveloppe est munie d'une ouverture (6) pour introduire la canule (12).

15. Installation selon l'une quelconque des revendications 12 à 14,
**caractérisée en ce que**
chaque enveloppe est séparée de l'enveloppe suivante par une zone de séparation (53) qui comporte une référence (54) pour reconnaître la présence effective d'une enveloppe dans le poste.

16. Installation selon la revendication 12 ou 15,
**caractérisée en ce qu**
elle comprend les moyens suivants :
- un dispositif pour fournir une bande tubulaire,
- des dispositifs pour réaliser deux cordons de soudure transversaux dans la bande, au moins pour délimiter une enveloppe, ct
- des dispositifs pour séparer l'enveloppe remplie par rapport à la bande en exécutant une coupe au niveau de l'un des cordons de soudure.

17. Installation selon l'une quelconque des revendications 12 à 16,
**caractérisée par**
un poste de fabrication de la bande.

18. Installation selon l'une quelconque des revendications 10 à 17,
**caractérisée en ce qu'**
elle comporte un automate programmable (60) qui est activé manuellement ou automatiquement par un palpeur (55) qui détecte la présence de la référence d'une enveloppe dans le poste, et lance le fonctionnement en série avec,
- un actionneur (37) qui commande le coulissement relatif entre la canule d'injection et d'enveloppe perméable,
- un dispositif de mise en forme (8),
- une électrovanne (11) ouvert/fermé pour une conduite d'alimentation (10) dans le poste de dioxyde de carbone liquide,
- les dispositifs (45) pour couper l'enveloppe remplie de neige carbonique et former un bloc de refroidissement (1),
- des dispositifs (42, 43) pour fournir une nouvelle enveloppe perméable au poste.
